# EUROPEAN PATENT APPLICATION

(11) **EP 4 811 779 A1**
(43) Date of publication of application: **23.09.2026**
(21) Application number: 25305368.0
(22) Date of filing: 18.03.2025
(51) Int. Cl.: H04N 19/117, H04N 19/136, H04N 19/176, H04N 19/82, H04N 19/86

(54) **DECODER-SIDE DERIVED IN LOOP FILTERING**

(71) Applicant: InterDigital CE Patent Holdings, SAS, 75017 Paris (FR)
(72) Inventor: NASER, Karam, 35250 MOUAZE (FR); LEFEBVRE, Frederic, 35000 RENNES (FR); GALPIN, Franck, 35235 THORIGNE-FOUILLARD (FR); LE LEANNEC, Fabrice, 35830 BETTON (FR)
(74) Representative: Vossius & Partner Patentanwälte Rechtsanwälte mbB

(57) **Abstract**

Methods and apparatus are provided for in-loop filtering. In one embodiment, the filter coefficients are derived using templates of samples around a sample. In another embodiment, multiple templates are used around a block containing a current sample. The coefficients providing a minimized error between filtered and non-filtered templates can be used for filtering. The embodiments are suitable for in-loop filtering and coefficients can be derived by a decoder using reconstructed samples.

## Description

### TECHNICAL FIELD

At least one of the present embodiments generally relates to a method or an apparatus for decoder-side derived in loop filtering for hybrid block-based video codecs.

### BACKGROUND

The general aspects described herein relate to approaches for video compression and decompression, and particularly to in-loop filtering for hybrid block-based video codecs.

### SUMMARY

At least one of the present embodiments generally relates to a method or an apparatus for decoder-side derived in loop filtering for hybrid block-based video codecs.

According to a first aspect, there is provided a method. The method comprises steps for determining filter coefficients that minimize an error between a filtered template and a non-filtered template around a current sample in a video picture, applying a filter using the filter coefficients to a block comprising the current sample; and, encoding blocks in the video picture using the block that was filtered.

According to a second aspect, there is provided a method. The method comprises steps for determining filter coefficients that minimize an error between a filtered template and a non-filtered template around a current sample in a video picture, applying a filter using the filter coefficients to a block comprising the current sample; and, decoding blocks in the video picture using the block that was filtered.

According to another aspect, there is provided an apparatus. The apparatus comprises a processor and a memory. The processor can be configured to operate on video signals and data according to any of the described methods.

According to another general aspect of at least one embodiment, there is provided a device comprising an apparatus according to any of the decoding embodiments; and at least one of (i) an antenna configured to receive a signal, the signal including the video signal, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

Figure 1 illustrates loop filters in VVC.
Figure 2 illustrates an example of CCALF in VVC.
Figure 3 illustrates additional loop filters implemented in ECM.
Figure 4 illustrates in-loop filtering in ECM.
Figure 5 illustrates BIF shape in ECM.
Figure 6 illustrates an example of samples used for a learning framework.
Figure 7 illustrates the flow of processing with an adaptive filter placed before an Adaptive Loop Filter (ALF).

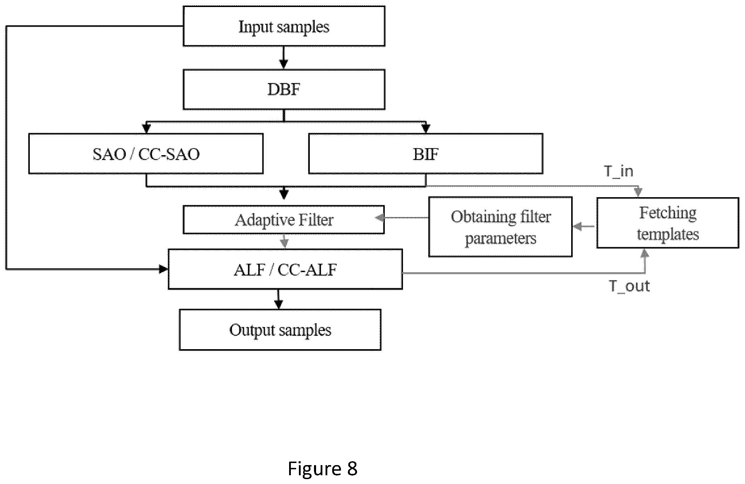

Figure 8 illustrates the inputs to the fetching templates for the adaptive filter.
Figure 9 illustrates an example filter shape.
Figure 10 illustrates multiple templates around a coding tree unit (CTU).
Figure 11 illustrates one embodiment of a first method under the described aspects.
Figure 12 illustrates one embodiment of a second method under the described aspects
Figure 13 illustrates one embodiment of an apparatus under the described aspects.
Figure 14 illustrates a standard, generic, video compression scheme.
Figure 15 illustrates a standard, generic, video decompression scheme.
Figure 16 illustrates a processor-based system for encoding/decoding under the general described aspects.

### DETAILED DESCRIPTION

The embodiments described here are in the field of video compression. To achieve high compression efficiency, image and video coding schemes usually employ block-based prediction, including motion vector prediction, and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

In the HEVC (High Efficiency Video Coding) video compression standard, motion compensated temporal prediction is employed to exploit the redundancy that exists between successive pictures of a video.

### In-Loop Filters

Block-based intra/inter prediction and transform coding, together with residues quantization, induce a variety of artifacts in the reconstructed blocks, at medium and low bitrates. In order to reduce those artifacts in the reconstructed frames, video coding standards, such as VVC, and state-of-the-art video coding solutions, such as ECM, implement in-loop filters, such as deblocking filtering (DBF), Bilateral filtering (BIF), Sample-adaptive offset (SAO) and Adaptive loop filtering (ALF).

Deblocking filter (DBF) aims at smoothing discontinuities that may appear along block boundaries. Sample-adaptive offset (SAO) is designed to attenuate artifacts occurring around edges and correct the local average intensity changes (e.g. banding artifacts) with offsets signalled in the bitstream. Bilateral filter (BIF) aims at denoising further reconstructed pictures from artifacts induced by quantization of the prediction residues in the Transform domain. Adaptive loop filters (ALF) are determined at encoder side as optimal filters according to a rate-distortion criterion. ALF filters are transmitted along with the bitstream, then retrieved and used at decoder side.

### In-loop Filters in Versatile Video Coding (VVC)

The VVC standard implements three kinds of in-loop filters: deblocking filter (DBF), Sample-adaptive offset (SAO), and Adaptive loop filter (ALF). The deblocking filter aims at reducing blocking discontinuities. Sample-adaptive offset mostly aims at reducing artifacts resulting from the quantization of transform coefficients. Adaptive loop filter and Cross-component adaptive loop filter are adaptive filters enabling to enhance the reconstructed signal, using for instance Wiener-filter encoding approaches.

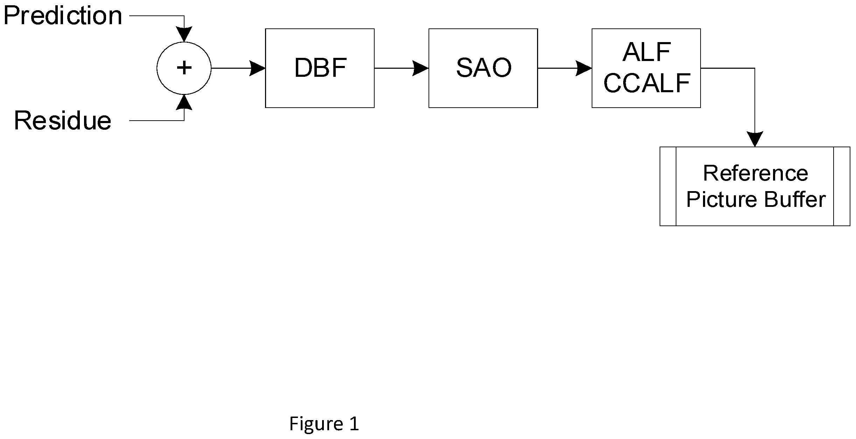

The workflow of VVC in-loop filters is depicted in Figure 1. If local deblocking conditions are met, Luma and Chroma reconstructed samples located along block boundaries are first filtered with deblocking filters (DBF). Then offsets are added locally depending on a classification based on band-classifier or edge-classifier with Sample-adaptive offset (SAO). Eventually, Adaptive-loop filters (ALF) and its variant Cross-component Adaptive loop filters (CCALF) are run before storing the resulting sample values in the Reference Picture buffer.

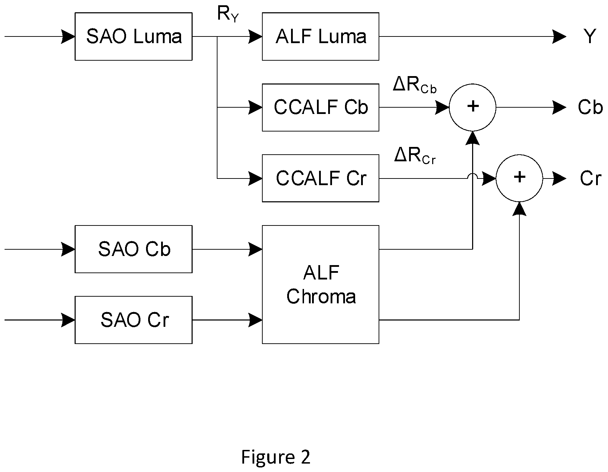

Figure 2 details the intricated workflows of ALF and CCALF in VVC. CCALF uses the Luma samples to refine Chroma sample values concurrently with ALF Luma and ALF Chroma.

### In-loop filters in ECM

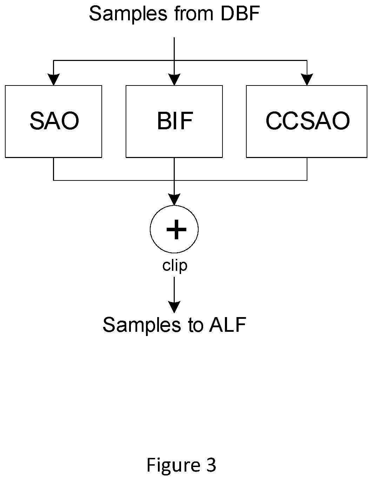

Further loop filters were introduced in Enhanced Compression Model (ECM) software:
Bilateral filtering (BIF)
Cross-component Sample adaptive offset (CCSAO)
Both are carried out in the same loop-filter stage as SAO, and, like SAO, use samples from deblocking as input, as shown in Figure 3.

### Bilateral filter (BIF, as in JVET-AJ2025)

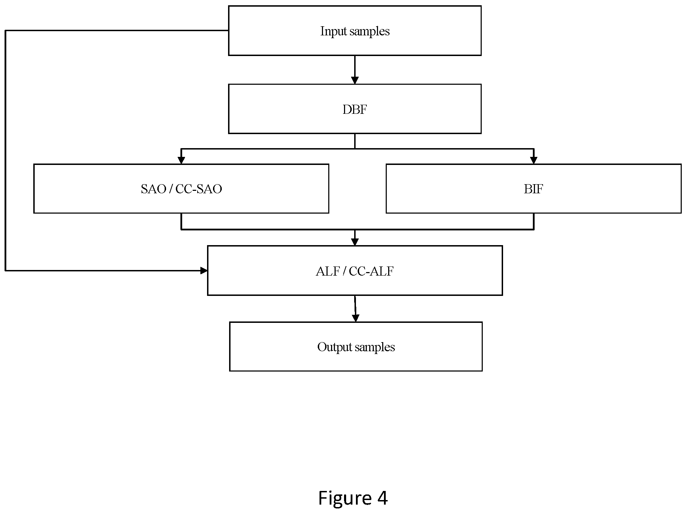

The filter is carried out in the sample adaptive offset (SAO) loop-filter stage, as shown in Figure 4. The bilateral filter (BIF), SAO and CC-SAO are using samples from deblocking as input. Each filter creates an offset per sample, and these are added to the input sample and then clipped, before proceeding to ALF.

In detail, the output sample *S_{OUT}* is obtained as ${S}_{OUT} = clip \left({S}_{IN}+{δ}_{SAO}+{δ}_{CCSAO}+{δ}_{BIF}\right) ,$ **where** *S_{IN}* is the input sample from deblocking, *δ_{BIF}* is the offset from the bilateral filter, *δ_{SAO}* is the offset from SAO and *δ_{CCSAO}* is offset from CC-SAO.

The implementation provides the possibility for the encoder to enable or disable filtering at the CTU and slice level. The encoder takes a decision by evaluating the RDO cost.

For CTUs that are filtered, the filtering process proceeds as follows.

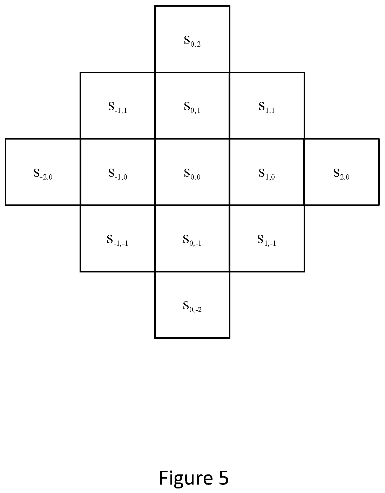

At the picture border, where samples are unavailable, the bilateral filter uses extension (sample repetition) to fill in unavailable samples. For virtual boundaries, the behavior is the same as for SAO, i.e., no filtering occurs. When crossing horizontal CTU borders, the bilateral filter can access the same samples as SAO is accessing. As an example, if the center sample ***S*_{0,0}** (see Figure 5) is located on the top line of a CTU, *S*_{-1,1}, *S*_{0,1} and *S*_{1,1} are read from the CTU above, just like SAO does, but S_{0,2} is padded, so no extra line buffer is needed compared to JVET-P0073.

The filter shape and the samples surrounding the center sample ***S*_{0,0}** are denoted according to Figure 5. This diamond shape is different from JVET-P0073 which used a square filter support.

The BIF offset equals a sum of 12 offsets ${δ}_{BIF} = \left({C}_{TU}⋅\left[\sum sign \left({S}_{i , j}-{S}_{0,0}\right) ⋅ {F}_{BIF , i , j , QP} \left(\left|{S}_{i , j}-{S}_{0,0}\right|\right)\right]+128\right) ≫ 8 ,$ where *F*_{BIF,*i,j*,QP} is based on a 26x16 LUT of 8-bit integers denoted by LUT_{base,QP} (for 26 QPs from 17 to 42 and 16 levels of sample differences). Three scale factors (*C*_{1,0}*, C*_{1,1} and *C*_{2,0}) are used to pre-compute three LUTs for three different neighbor distances (1, $\sqrt{2}$, and 2), i.e.: ${LUT}_{i , j , QP} \left(k\right) = \left({C}_{i , j}⋅{LUT}_{base , QP}\left(k\right)+4\right) ≫ 3 .$

Further, the averaging linear interpolation is used to double the number of level for |*S_{i,j}* - *S*_{0,0}| from 16 to 32, i.e.: $\begin{matrix}{F}_{BIF , i , j , QP}^{luma} \left(d\right) = \left({LUT}_{i , j , QP}\left(min\left\{\left(d+2\right)>>3,15\right\}\right)+{LUT}_{i , j , QP}\left(min\left\{\left(d+6\right)>>3,15\right\}\right)+1\right) \\ > > 1 .\end{matrix}$

For chroma, the number of cut off bits is decreased from 3 to 2, i.e. $\begin{matrix}{F}_{BIF , i , j , QP}^{chroma} \left(d\right) = \left({LUT}_{i , j , QP}\left(min\left\{\left(d+1\right)>>2,15\right\}\right)+{LUT}_{i , j , QP}\left(min\left\{\left(d+3\right)>>2,15\right\}\right)+1\right) \\ > > 1 .\end{matrix}$

The TU-based scale factor *C*_{TU} in formula (1) is defined as follows: ${C}_{TU} = {C}_{w , h}^{TU} + {C}_{MAD}^{TU} ,$ where ${C}_{w , h}^{TU}$ is based on the TU's shape sizes and ${C}_{MAD}^{TU}$ is based on the mean absolute difference (MAD) of the TU. Both ${C}_{w , h}^{TU}$ and ${C}_{MAD}^{TU}$ are calculated using LUTs. More precisely, let LUT*_{w,h}* be a 2D 8 × 8 lookup table with non-negative 8-bit integer values, and let LUT_{MAD} be a 1D 16-entry lookup table with non-negative 8-bit integer values. Then these scale factors are defined as follows: ${C}_{w , h}^{TU} = {LUT}_{w , h} \left({log}_{2} {width}_{TU}, {log}_{2} {height}_{TU}\right) ,$ ${C}_{MAD}^{TU} = {LUT}_{MAD} \left(min\left({MAD}_{TU}≫4,15\right)\right) .$

The MAD of a (*h* × *w*)-size TU with the channel samples denoted by *s_{i,j}* is defined as follows: $MAD = \frac{1}{hw} {\sum }_{i = 1}^{h} {\sum }_{j = 1}^{w} \left|{s}_{i , j}-\frac{1}{hw}{\sum }_{i = 1}^{h} {\sum }_{j = 1}^{w} {s}_{i , j}\right| .$

**In total,** four 64-byte tables LUT*_{w,h}* and four 16-byte tables LUT_{MAD} are introduced (for luma/chroma component, for intra/inter prediction).

Note that *C*_{TU} is a constant for all samples of the same channel inside one TU.

According to the parameters values provided in the source code of ECM 13.0, the maximal value of *C*_{TU} is 20 (chroma, intra prediction) and the maximal value of Σ*F*_{BIF,*i,j*,QP}(|S*_{i,j}* - *S*_{0,0}|) is 820, however the value obtained in the modified version of formula (1) before right bit-shifting belongs to the interval [-13812, 14068] in the worst case. Therefore, all arithmetic operations can be successfully accomplished in 15-bit singed integers. The only multiplication in formula (1) can be implemented as a multiplication of 5-bit unsigned integer and 11-bit signed integer with the result saved into 15-bit signed integer.

Finally, bilateral_filter_strength is signalled in the PPS (Picture Parameter Set) and can be 0 or 1. For full strength filtering, one uses exactly Equation (1). For the half-strength filtering (bilateral_filter_strength = 0), formula (1) is slightly modified to decrease the value in two times approximately: ${δ}_{BIF} = \left({C}_{TU}⋅\left[\sum sign\left({S}_{i , j}-{S}_{0 , 0}\right)⋅{F}_{BIF , i , j , QP}\left(\left|{S}_{i , j}-{S}_{0 , 0}\right|\right)\right]+256\right) ≫ 9 .$

### Cross-component sample adaptive offset (CCSAO)

CCSAO is used to refine reconstructed samples. Similarly to SAO, CCSAO classifies the reconstructed samples into different categories, derives one offset for each category and adds the offset to the reconstructed samples in that category. Whereas SAO uses a single component of current sample as input, CCSAO utilizes all three components to classify the current sample into different colour bands.

### Joint clipping

SAO, BIF and CCSAO offsets are computed in parallel, added to the reconstructed samples and jointly clipped, before proceeding to ALF, as shown in Figure 3.

The loop filtering process improves the reconstruction quality by applying a series of different filters, each filter targets different reconstruction improvements. Specifically, deblocking filter aims at removing deblocking artefacts, SAO retains missing edge and band information, BIF is a general denoising filter and ALF is least square estimator for reducing the noise between filtered and original image.

In addition to improving the quality of the current image, loop filters can improve the prediction quality for inter coding. That is, improving the quality of current image leads to better inter in future frame.

Improving further the reconstruction quality requires generally larger number filter coefficients to better capture the current frame statistics. However, this increases the signaling overhead and thus doesn't improve the rate-quality trade-of.

The described embodiments aim at improving the reconstruction quality without additional signaling. This is done by learning the filter parameters from the reconstructed part instead of signaling them.

The described embodiments propose learning the filtering parameters instead of signaling them. This leads to improve the reconstruction quality without requiring further signaling.

### Learning Framework

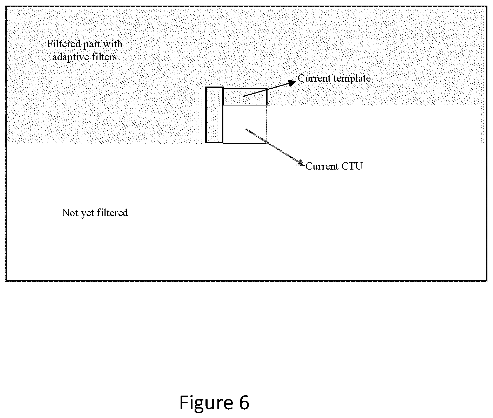

The learning framework is based on using samples available to both encoder and decoder. This typically corresponds to template pixels. That is, for each coding unit (CU/CTU), the samples above and left of it are available to the encoder and the decoder while processing the current CU. Therefore, these samples are used for the learning framework. The samples are indicated in the figure 6.

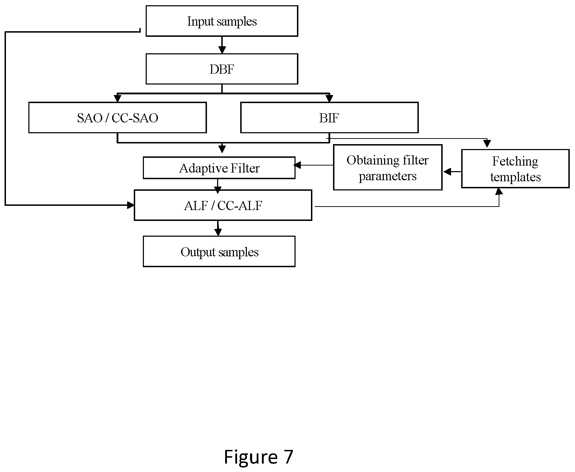

The framework starts fetching two templates corresponding to filtered and non-filtered part on the L shaped part on top left of the current block. The non-filtered part corresponds to the signal before applying the adaptive filtering, and the filtered one is the output of the adaptive filters. It depends on where the adaptive filter is placed in the filtering chain. An example is if the adaptive filter is placed before ALF (as in the figure 7), the non-filtered input corresponds to the samples before ALF (BIF/SAO-CC-SAO output) and the filtered input corresponds to ALF output.

The learning framework is about minimizing the error between the filtered and non-filtered template. Specifically, the adaptive filter coefficients are computed to minimize this error.

### Embodiment 1: Least square based filter parameters

In this embodiment, the filter parameters are obtained by solving the equation for minimizing the least square error between the filtered and non filtered template. Let T_in and T_out represent the non-filtered and filtered template respectively.

The objective is to learn the filter coefficients that minimizes the following error $Err = {\left(Filter\left(T_in\right)-T_out\right)}^{∧} 2$

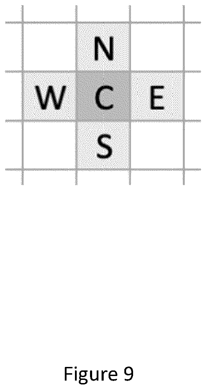

Assume that filter shape is taking the central pixel and 4 neighboring pixels, as shown in the Figure 9 (similar to CCCM filter in ECM):
And the filter coefficients are defined as A0, A1, A2, A3 and A4 + B, which correspond to the central pixel, above, left, bottom, right and constant value, the filtered output is written as $Filter \left(T_in\left(x, y\right)\right) = A 0 \times T \left(x, y\right) + A 1 \times T \left(x, y\right) + A 2 \times T \left(x, y\right) + A 3 \times T \left(x, y\right) + A 4 \times T \left(x, y\right) + B$

This can be written as F(T_in) = A x T_in **→** in vectorial form,

And the error to minimize is $A \times T _ in + B - T _ out$

Least square error can be used to solve this equation to find the filter coefficients and the constant value. This filter is applied to the current block to improve its reconstruction quality.

### Embodiment 2: Constraining Parameters

For more stable solution, the filter form can be fixed to a certain form. Typically, bilateral filter with gaussian kernels is considered to be quite stable filter for denoising the reconstructed image. $w \left(i, j, k, l\right) = exp \left(-\frac{{\left(i-k\right)}^{2} + {\left(j-l\right)}^{2}}{2 {σ}_{d}^{2}}-\frac{{\left‖I\left(i, j\right)-I\left(k, l\right)\right‖}^{2}}{2 {σ}_{r}^{2}}\right)$

Specifically, the objective is to learn the two standard deviations values σd and σr from the reconstructed template. There are multiple ways to find the optimal value. Basically, the encoder and decoder can use a gradient descent like algorithm to find the values, or testing different values and find the best pair.

### Embodiment 3: Predefined filter set

In this embodiment, a predefined filter set are learned offline can be used. Specifically, a set of N filters are learned offline and tested on the template. The best filter is select, which corresponds to the one the minimizes the template error.

The filter set can be in any form, however, bilateral filter type can be considered as stable enough. That is, N pairs of 2 standard deviations can be learned offline, and N template tests are performed, and the best filter is selected.

### Embodiment 4: Multiple templates

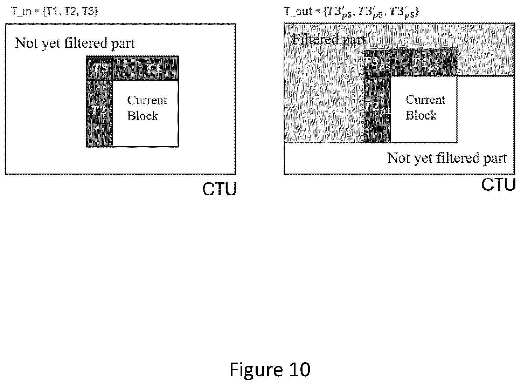

Considering a set of templates that surrounds the current block to filter in a CTU. Let T_in and T_out represent the set of non-filtered templates and the set of filtered templates respectively Figure 10. Let CurrBlk the current block. For e.g current block can be a CU in a CTU.

Non-filtered templates *T1, T2, T3,* have been previously processed with Filter. For e.g Filter has 10 sets of parameters, called profiles p={p1,..,p10}. Filter can be BIF and the profiles are composed of different values of σd and σr$T {1}_{p 3}^{'} = Filter \left(T1,p3\right)$$T {2}_{p 1}^{'} = Filter \left(T2,p1\right)$$T {3}_{p 5}^{'} = Filter \left(T3,p5\right)$

First, for each profile pn, the error is computed. For e.g, error is Euclidean distance L2: $\begin{matrix}\begin{matrix}L {2}_{1} = L 2 \left(Filter\left(T1,p1\right),T{1}_{p 3}^{′}\right) + L 2 \left(Filter\left(T2,p1\right),T{2}_{p 1}^{′}\right) + L 2 \left(Filter\left(T3,p1\right),T{3}_{p 5}^{′}\right) \\ …\end{matrix} \\ L {2}_{n} = L 2 \left(Filter\left(T1,pn\right),T{1}_{p 3}^{′}\right) + L 2 \left(Filter\left(T2,pn\right),T{2}_{p 1}^{′}\right) + L 2 \left(Filter\left(T3,pn\right),T{3}_{p 5}^{′}\right)\end{matrix}$

Then, the profile pk that minimize *L*2*ₖ* is selected.

Finaly the current block is filtered ${CurrBlk}_{pk}^{′} = Filter \left(CurrBlk, pk\right)$

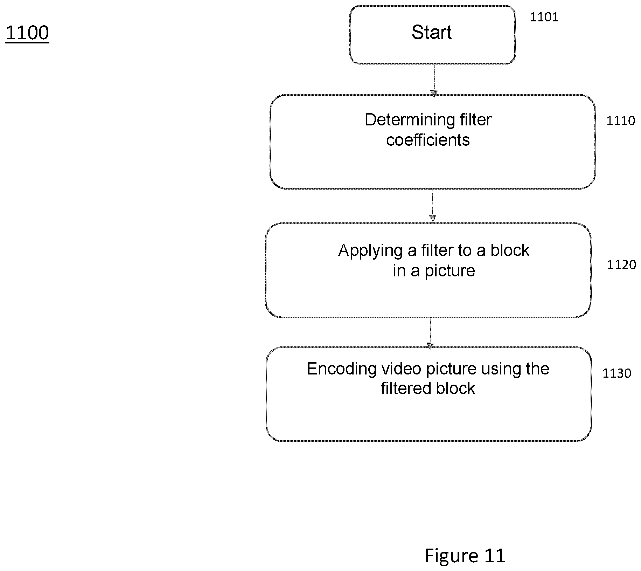

One embodiment of a method 1100 under the general aspects described here is shown in Figure 11. The method commences at start block 1101 and control proceeds to block 1110 for determining filter coefficients that minimize an error between a filtered template and a non-filtered template around a current sample in a video picture. Control proceeds from block 1110 to block 1120 for applying a filter using the filter coefficients to a block comprising the current sample. Control proceeds from block 1120 to block 1130 for encoding blocks in the video picture using the block that was filtered.

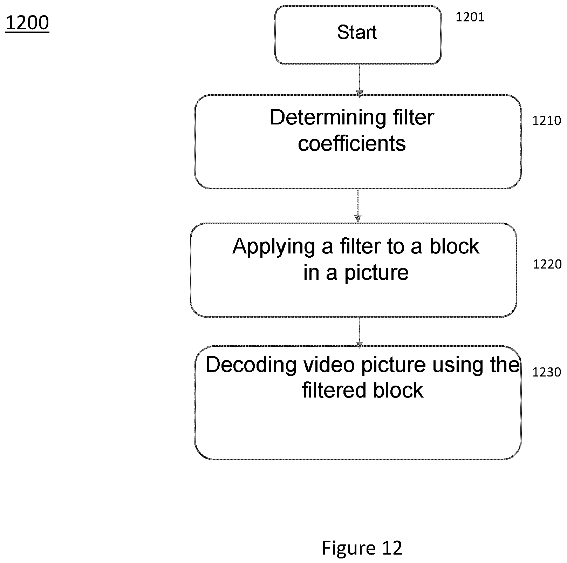

One embodiment of a method 1200 under the general aspects described here is shown in Figure 12. The method commences at start block 1201 and control proceeds to block 1210 for determining filter coefficients that minimize an error between a filtered template and a non-filtered template around a current sample in a video picture. Control proceeds from block 1210 to block 1220 for applying a filter using the filter coefficients to a block comprising the current sample. Control proceeds from block 1220 to block 1230 for decoding blocks in the video picture using the block that was filtered.

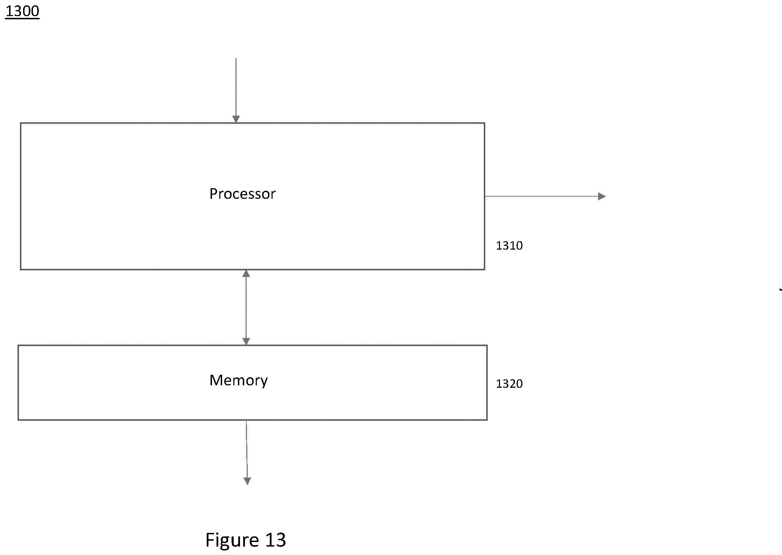

Figure 13 shows one embodiment of an apparatus 1300 for encoding, decoding, compressing or decompressing, or filtering of video data using the aforementioned methods. The apparatus comprises Processor 1310 and can be interconnected to a memory 1320 through at least one port. Both Processor 1310 and memory 1320 can also have one or more additional interconnections to external connections.

Processor 1310 is also configured to either insert or receive information in a bitstream and, either compressing, encoding, decoding, or quantizing using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the application or scope of those aspects. Indeed, all of the different aspects can be combined and interchanged to provide further aspects. Moreover, the aspects can be combined and interchanged with aspects described in earlier filings as well.

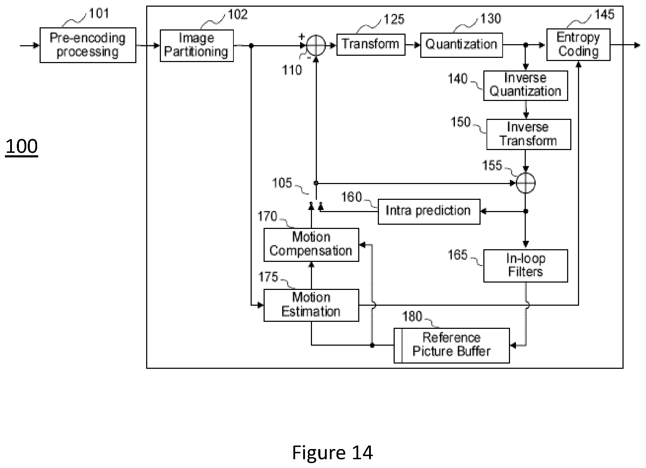

The aspects described and contemplated in this application can be implemented in many different forms. Figures 14, 15, and 16 provide some embodiments, but other embodiments are contemplated and the discussion of Figures 14, 15, and 16 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

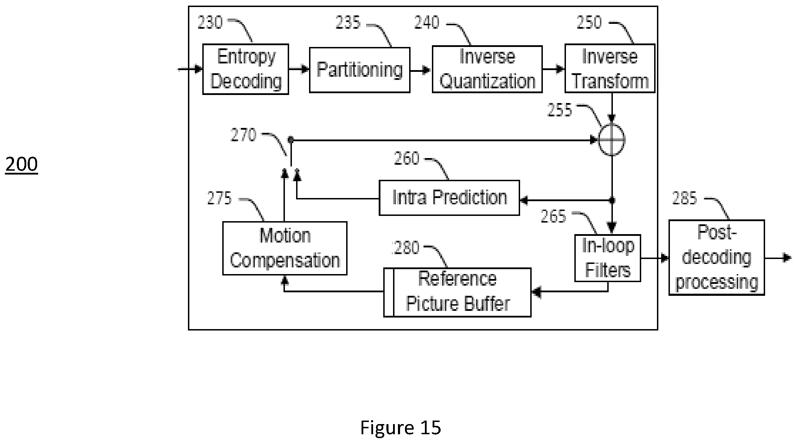

Various methods and other aspects described in this application can be used to modify modules, for example, the intra prediction, entropy coding, and/or decoding modules (160, 260, 145, 230), of a video encoder 100 and decoder 200 as shown in Figure 14 and Figure 15. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 14 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 15 illustrates a block diagram of a video decoder 200. In the decoder 200, a bitstream is decoded by the decoder elements as described below. Video decoder 200 generally performs a decoding pass reciprocal to the encoding pass as described in Figure 14. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

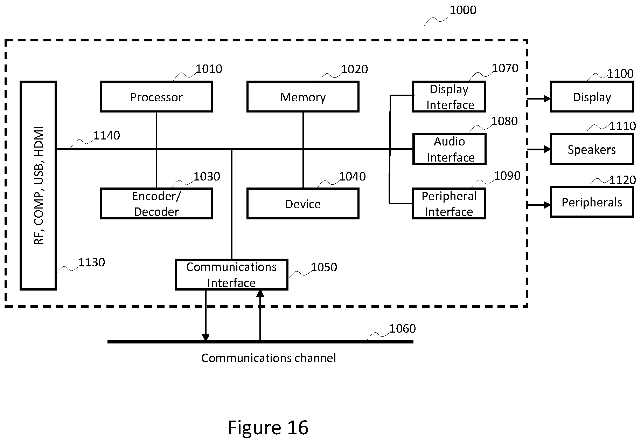

Figure 16 illustrates a block diagram of an example of a system 1000 in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 16, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:
At least one embodiment comprises performing an analysis of errors between a filtered template of samples and a non-filtered template of samples around a current sample.

At least one embodiment comprises the above embodiment and further comprising using multiple templates.

At least one embodiment comprises any of the above embodiments wherein determining filter coefficients is comprised of selecting one of N filters learned offline and determined based on the template.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

## Claims

1. A method, comprising:
determining filter coefficients that minimize an error between a filtered template and a non-filtered template around a current sample in a video picture,
applying a filter using the filter coefficients to a block comprising the current sample; and,
encoding blocks in the video picture using the block that was filtered.

2. An apparatus, comprising a memory and a processor configured for:
determining filter coefficients that minimize an error between a filtered template and a non-filtered template around a current sample in a video picture,
applying a filter using the filter coefficients to a block comprising the current sample; and,
encoding blocks in the video picture using the block that was filtered.

3. A method, comprising:
determining filter coefficients that minimize an error between a filtered template and a non-filtered template around a current sample in a video picture,
applying a filter using the filter coefficients to a block comprising the current sample; and,
decoding blocks in the video picture using the block that was filtered.

4. An apparatus, comprising a memory and a processor configured for:
determining filter coefficients that minimize an error between a filtered template and a non-filtered template around a current sample in a video picture,
applying a filter using the filter coefficients to a block comprising the current sample; and,
decoding blocks in the video picture using the block that was filtered.

5. The method of any one of Claims 1 or 3, or the apparatus of any one of Claims 2 or 4, wherein the filter comprises the current sample and four samples surrounding the current sample.

6. The method of any one of Claims 1, 3, or 5, or the apparatus of any one of Claims 2, 4, or 5, wherein the filter comprises a bilateral filter with gaussian kernels.

7. The method of any one of Claims 1, 3, 5 or 6, or the apparatus of any one of Claims 2, or 4 through 6, wherein determining filter coefficients is comprised of selecting one of N filters learned offline and determined based on the template.

8. The method of any one of Claims 1, 3, 5 through 7, or the apparatus of any one of Claims 2, or 4 through 7, wherein determining filter coefficients is made using multiple templates surrounding the block containing the current sample.

9. The method, or the apparatus, of Claim 8, wherein filter coefficients are for a bilateral filter.

10. The method of any one of Claims 1, 3, 5 through 7, or the apparatus of any one of Claims 2, or 4 through 7, wherein determining filter coefficients is done by considering a Euclidean error distance.

11. A device comprising:
an apparatus according to Claim 2; and
at least one of (i) an antenna configured to receive a signal, the signal including a video signal, (ii) a band limiter configured to limit the received signal to a band of frequencies that includes the video block, and (iii) a display configured to display an output representative of the video block.

12. A non-transitory computer readable medium containing data content generated according to the method of any one of claims 1, or 3 through 10, or by the apparatus of any one of claims 2, or 2 through 3, for playback using a processor.

13. A signal comprising video data generated according to the method of any one of claims 1, or 3 through 10, or by the apparatus of any one of claims 2, or 3 through 10, for playback using a processor.

14. A non-transitory computer program product comprising instructions which, when the program is executed by a computer, cause the computer to carry out the method of any one of claims 1 or 3 through 10.
